# EUROPEAN PATENT APPLICATION

(11) **EP 4 438 375 A1**
(43) Date of publication of application: **02.10.2024**
(21) Application number: 23220022.0
(22) Date of filing: 22.12.2023
(51) Int. Cl.: B60L 1/00, B60L 53/80, B60S 5/06

(54) **ON-BOARD DEVICE CONTROL METHOD, COMPUTER DEVICE, STORAGE MEDIUM, AND VEHICLE**

(30) Priority: 31.03.2023 CN 202310355745
(71) Applicant: Nio Technology (Anhui) Co., Ltd, Hefei City, Anhui 230601 (CN)
(72) Inventor: WANG, Xiaoli, Hefei City, Anhui, 230601 (CN); LI, Xinguang, Hefei City, Anhui, 230601 (CN); LI, Zhen, Hefei City, Anhui, 230601 (CN)
(74) Representative: Vossius & Partner Patentanwälte Rechtsanwälte mbB

(57) **Abstract**

The disclosure relates to the technical field of vehicle control, and particularly provides an on-board device control method, a computer device, a storage medium, and a vehicle, with a view to solving the problem of how to control an on-board device based on a low-voltage battery level during battery swapping of a vehicle. To this end, the method of the disclosure includes: obtaining a low-voltage battery level; controlling an on-board device based on the low-voltage battery level and a preset on-board device priority; obtaining battery swapping process information; and displaying the battery swapping process information by an on-board display device based on the low-voltage battery level. According to the disclosure, whether on-board devices having different priorities respond to switch-on instructions given by a user are controlled based on different low-voltage battery levels, so that battery control can be optimized, and the user experience is improved while energy is saved on. The battery swapping process information is displayed in different forms by a console screen, and rich prompt messages, user operation instruction information, etc. are displayed, which further improves the interaction experience of the user.

## Description

The present application claims priority of CN patent application 202310355745.9 filed on March 31, 2023 with the title "On-board device control method, computer device, storage medium and vehicle".

### Technical Field

The disclosure relates to the technical field of vehicle control, and particularly provides an on-board device control method, a computer device, a storage medium, and a vehicle.

### Background

An energy replenishment solution for new energy electric vehicles mainly includes two modes: vehicle battery charging and battery swapping. Compared with the vehicle battery charging mode, battery swapping operations can be completed in the battery swapping mode within shorter time, that is, swap-and-go is achieved, so that the problem of excessively long waiting time for energy replenishment of new energy electric vehicles is greatly alleviated, and time is saved for a user.

At present, when a vehicle arrives at a power exchange station end for battery swapping, a driver and a passenger are usually required to get off the vehicle, and staff in the power exchange station end drives the vehicle to a battery swapping position, and after the battery swapping is completed, drives the vehicle back to the driver. With the advancement of technology, safety during battery swapping has been gradually improved, and an on-board battery swapping method in which the driver and the passenger are not required to get off the vehicle has been used in the power exchange station end. However, during battery swapping, most on-board devices of the vehicle are unavailable, and the user would feel more boring in hot or cold weather. Therefore, how to enable, when allowed by low-voltage battery level during battery swapping, the user to continue using some on-board comforting devices (for example, an air conditioning fan and a seat heating apparatus) and/or on-board entertainment devices (for example, an on-board display device and an vehicle sound system) and know about battery swapping process information in time, so as to continue to provide comfortable environment for the user and reduce boredom while waiting for battery swapping has become a problem urgent to be solved.

Accordingly, there is a need for a novel solution to solve the above problem in the art.

### Summary

The disclosure aims to solve or partially solve the foregoing technical problem, that is, the problem of how to control an on-board device based on a low-voltage battery level during battery swapping of a vehicle.

In a first aspect, the disclosure provides an on-board device control method, an on-board device being powered by a low-voltage battery module of a vehicle, the method including:
obtaining a low-voltage battery level of the low-voltage battery module; and
controlling the on-board device based on the low-voltage battery level and a preset on-board device priority.

In an implementation of the on-board device control method, controlling the on-board device based on the low-voltage battery level and a preset on-board device priority includes:
when the low-voltage battery level is greater than or equal to a first level threshold, allowing a response to a switch-on instruction given by a user for a second-priority device and/or a third-priority device;
when the low-voltage battery level is greater than or equal to a second level threshold and less than the first level threshold, allowing a response to a switch-on instruction given by the user for the second-priority device, and disabling the third-priority device;
when the low-voltage battery level is greater than or equal to a third level threshold and less than the second level threshold, forbidding a response to a switch-on instruction given by the user for the second-priority device, and disabling the third-priority device;
when the low-voltage battery level is less than the third level threshold, disabling the second-priority device and the third-priority device; and
always enabling a first-priority device.

In an implementation of the on-board device control method, controlling the on-board device based on the low-voltage battery level and a preset on-board device priority further includes:
when the low-voltage battery level drops to the first level threshold, sending a first prompt message to the user, and automatically switching off the switched-on third-priority device; and
when the low-voltage battery level drops to the second level threshold, sending a second prompt message to the user, and automatically switching off the second-priority device switched on by the user.

In an implementation of the on-board device control method, controlling the on-board device based on the low-voltage battery level and a preset on-board device priority further includes:
when the low-voltage battery level is greater than or equal to the third level threshold and less than the second level threshold, allowing a system message of the vehicle to be displayed by the second-priority device.

In an implementation of the on-board device control method, the method further includes:
obtaining battery swapping process information from a power exchange station end; and
displaying the battery swapping process information by an on-board display device based on the low-voltage battery level, wherein
the on-board display device is the second-priority device.

In an implementation of the on-board device control method, displaying the battery swapping process information by an on-board display device based on the low-voltage battery level includes:
when the low-voltage battery level is greater than or equal to the second level threshold, displaying the battery swapping process information in the form of an animation; and
when the low-voltage battery level is greater than or equal to the third level threshold and less than the second level threshold, displaying the battery swapping process information in the form of a text.

In an implementation of the on-board device control method, when the battery swapping process information is displayed in the form of an animation, video contents set by the user are displayed in response to a switch-on instruction given by the user for the on-board display device, and the display of the battery swapping process information changes from the animation form to the text form.

In a second aspect, the disclosure provides a computer device, including a processor and a storage device adapted to store a plurality of program codes. The program codes are adapted to be loaded and run by the processor to perform the on-board device control method according to any one of the foregoing solutions.

In a third aspect, the disclosure provides a storage medium adapted to store a plurality of pieces of program code. The program codes are adapted to be loaded and run by a processor to cause the processor to carry out the on-board device control method according to any one of the foregoing solutions.

In a fourth aspect, the disclosure provides a vehicle, including a computer device according to the foregoing solution.

According to the disclosure, during battery swapping, the on-board device continues to be powered by a low-voltage battery, and whether the on-board device responds to an on-board device enabling instruction given by the user is controlled based on the low-voltage battery level and the preset on-board device priority, so that the control of the low-voltage battery is optimized, and comfortable and/or entertainment service can be provided for the user for a prolonged time, which greatly improves user experience while waiting for battery swapping of the vehicle. In addition, the battery swapping process information is displayed in different forms based on the low-voltage battery level by a console screen, and rich prompt messages, user operation guidance information, etc. are displayed, so that the interaction experience and satisfaction of the user are further improved.

### Brief Description of the Drawings

The disclosure of the invention will become more readily understood with reference to the accompanying drawings. Those skilled in the art readily understand that the accompanying drawings are merely for illustrative purposes and are not intended to limit the scope of protection of the disclosure.
FIG. 1 is a flowchart of main steps of an on-board device control method according to an embodiment of the disclosure;
FIG. 2 is a flowchart of main substeps of step S 102 in FIG. 1 according to an embodiment of the disclosure;

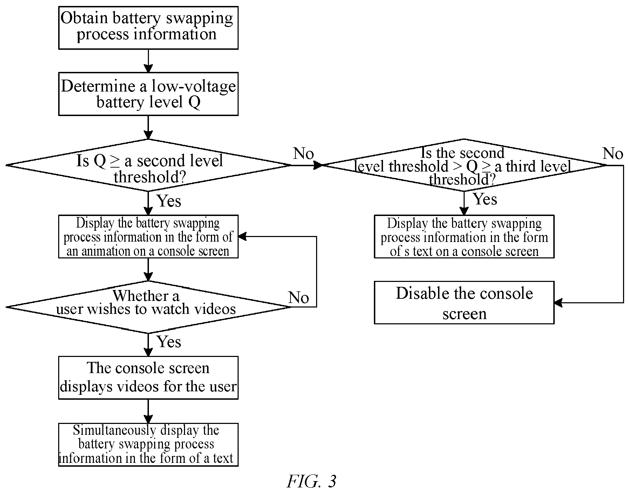

FIG. 3 is a flowchart of main steps of controlling the display of battery swapping process information according to an embodiment of the disclosure; and
FIG. 4 is a schematic diagram of a main structure of a computer device according to an embodiment of the disclosure.

### Detailed Description of Embodiments

To make the objectives, technical solutions, and advantages of embodiments of the disclosure clearer, the technical solutions in the embodiments of the disclosure will be clearly and completely described below with reference to the accompanying drawings. Apparently, the described embodiments are some of, rather than all of, the embodiments of the disclosure. All other embodiments obtained by those of ordinary skill in the art based on the embodiments of the disclosure without creative efforts shall fall within the scope of protection of the disclosure.

Those skilled in the art should understand that these implementations are only used to explain the technical principles of the disclosure, and are not intended to limit the scope of protection of the disclosure. Those skilled in the art can make adjustments on these implementations as required, to adapt to specific application scenarios.

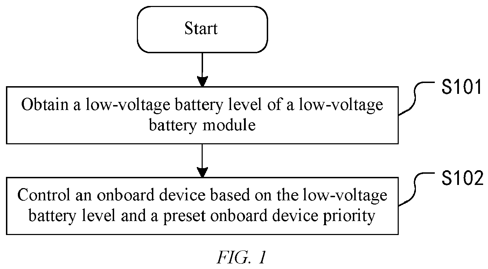

First, referring to FIG. 1, FIG. 1 is a flowchart of main steps of an on-board device control method according to an embodiment of the disclosure. As shown in FIG. 1, the on-board device control method of the disclosure includes:
step S 101, during which low-voltage battery level of a low-voltage battery module is obtained.
step S102, during which an on-board device is controlled based on the low-voltage battery level and a preset on-board device priority.

After a new energy electric vehicle is driven to a battery swapping position, a vehicle central controller (VCC) is connected to a station end controller of a power exchange station (PES) end via Wi-Fi, Bluetooth, or in another wireless communication manner, and the vehicle enters a battery swapping mode.

A battery swapping process mainly includes vehicle certification, vehicle preparation, battery swapping preparation, high-voltage battery swapping, vehicle self-inspection, high-voltage power-on, etc.

In general, in a battery swapping preparation phase, the vehicle central controller controls a high-voltage battery management system (BMS) to enter a single-point sleep state and switch off high-voltage power supply to meet the requirement of a battery plugging/unplugging operation during battery swapping, thereby ensuring personnel and device safety.

In addition, all on-board devices that are not being used by a user and that are not first-priority devices are switched off, and after a low-voltage load is reduced, the on-board device is powered by the low-voltage battery module (LBM) instead.

In step S 101, the vehicle central controller obtains the low-voltage battery level (for example, level of a 12 V storage battery) of the low-voltage battery module through a CAN bus in the vehicle.

In step S102, the on-board device is controlled based on the low-voltage battery level obtained in step S 101 and a preset priority class of the on-board device. Proper use of the low-voltage battery, the user can enable some on-board comforting and/or entertainment devices during battery swapping, so that a humanized design is embodied, and the user experience is improved.

In this embodiment of the disclosure, the on-board device priority is set comprehensively taking into consideration a function, power consumption, a frequency of usage by the user of the on-board device, etc. As an example, the function may be a vehicle control function, an entertainment function, a comforting function, etc. A vehicle control device has a higher priority than the entertainment device/comforting device. A low-power on-board device has a higher priority than a high-power on-board device. An on-board device that is used frequently by the user has a higher priority than an on-board device that is used less frequently. In addition, the user may also set the priorities of the on-board devices based on a personal preference.

Preferably, the on-board device priority relates to a first-priority device, a second-priority device, and a third-priority device. The first-priority device is mainly a vehicle control device, specifically including the vehicle central controller, a vehicle control unit (VCU), a low-voltage battery management module, a body control module (BCM), an air conditioning controller (ACC), a cockpit domain controller (CDC), etc.

The first-priority device remains enabled during power supply by the low-voltage battery module to ensure network communication between controllers, so that a response can be made to a user operation timely according to an instruction from the vehicle central controller to control the running of the second-priority device and the third-priority device. In addition, data communication between the vehicle and the power exchange station end is ensured, so that the vehicle central controller can obtain battery swapping process information of the vehicle in real time.

The second-priority device and the third-priority device are mainly execution devices capable of providing comforting and entertainment functions and the like for a driver and a passenger. The user may perform operations such as switching on a device, switching off a device, and setting a device parameter, by means of a button or a knob in the vehicle, an intelligent terminal connected to the vehicle, or the like. After receiving an operation request from the user, the vehicle central controller may select to respond to or deny the operation request from the user based on the low-voltage battery level, and notify a corresponding vehicle control device of the first-priority devices, and the vehicle control device controls a corresponding execution device.

The second-priority device specifically includes a seat heating apparatus, an air conditioning fan, an in-vehicle atmosphere lamp, etc. The third-priority device specifically includes an on-board display device, a vehicle sound system, a reading lamp, a make-up mirror lamp, etc.

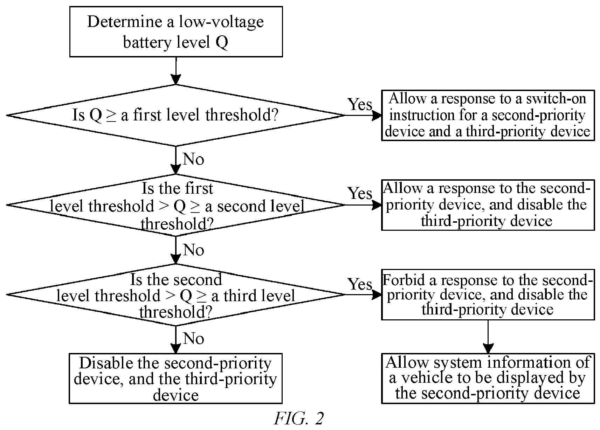

A specific implementation process of step S 102 is described next with reference to FIG. 2.

As an example, a first level threshold is set to 85% of a low-voltage battery capacity, a second level threshold is set to 70% of the low-voltage battery capacity, and a third level threshold is set to 60% of the low-voltage battery capacity. Those skilled in the art may also set an appropriate level threshold according to conditions such the low-voltage battery capacity, the power of on-board devices, etc.

Case 1: the low-voltage battery level is greater than or equal to the first level threshold. In this case, the low-voltage battery level is sufficient, more comforting and/or entertainment services can be provided for the user, and a response to a switch-on instruction given by the user for the second-priority device and/or the third-priority device is allowed to simultaneously switch on one or more on-board devices.

As an example, the user of the vehicle wishes to switch on in-vehicle air circulation with a low air volume, and also wishes to watch short videos on a console screen (the on-board display device). After receiving a signal that the user operating an associated switch and knob of an air conditioning device, the vehicle central controller sends, in response to the user operation, a switching signal and a fan running parameter (air volume parameter) to an air conditioning controller through the CAN bus, and the air conditioning controller controls the air conditioning fan to run after receiving a related instruction.

In addition, after receiving an operation signal from the console screen, the vehicle central controller also sends, in response to a user operation, an instruction of allowing a response to the user operation to the cockpit domain controller through the CAN bus, and the cockpit domain controller controls the console screen to display the short videos set by the user.

Case 2: the low-voltage battery level is greater than or equal to the second level threshold and less than the first level threshold. In this case, the low-voltage battery level is sufficient, a response to a switch-on instruction given by the user for the second-priority device can continue to be allowed, and the third-priority device is disabled.

As an example, the user of the vehicle wishes to switch on in-vehicle air circulation with a low air volume, and wishes to watch short videos on a console screen. In this case, the vehicle central controller does not respond to an air conditioning operation request from the user, but may respond to a console screen operation request from the user to play the short videos for the user. In addition, a prompt message may be sent to the user by means of the vehicle sound system and/or the console screen to inform the user that the low-voltage battery level drops and the air conditioning fan cannot be switched on.

Case 3: the low-voltage battery level is greater than or equal to the third level threshold and less than the second level threshold. In this case, the low-voltage battery level is slightly insufficient, the third-priority device is disabled, a response to a switch-on instruction given by the user for the second-priority device is forbidden, but a vehicle control system displays a system message of the vehicle on a specified on-board display device and/or by vehicle sound system of the second-priority devices.

As an example, the user of the vehicle wishes to switch on in-vehicle air circulation with a low air volume, and wishes to watch short videos on a console screen. In this case, the vehicle central controller does not respond to an air conditioning operation request and a console screen operation request from the user. In addition, a prompt message may be sent to the user by means of the vehicle sound system and/or the console screen to inform the user that the low-voltage battery level is low and the air conditioning fan and video playing cannot be switched on.

Case 4: the low-voltage battery level is less than the third level threshold. In this case, in order to ensure smooth completion of the battery swapping process and protect the low-voltage battery from damages caused by over-discharge, all third-priority devices and second-priority devices are disabled, and only the first-priority device is allowed to operate. That is to say, the third-priority devices and the second-priority devices will not respond to operation requests from the user, and the vehicle central controller will not display a system message of the vehicle by the second-priority devices.

In another embodiment, the low-voltage battery level is sufficient, and the user switch on the air conditioning fan, and watches videos on the console screen.

As the user uses the vehicle, the low-voltage battery level drops. When the low-voltage battery level drops to the first level threshold, a first prompt message is sent to the user to prompt the user that the air conditioning fan (third-priority device) will be automatically switched off because the low-voltage battery level drops, and a countdown may be synchronously displayed.

In this case, the user may manually switch off the air conditioning fan, or may do nothing, and the vehicle central controller automatically controls the air conditioning controller to switch off the air conditioning fan at the end of the countdown.

As the user uses the vehicle, the low-voltage battery level continues dropping. When the low-voltage battery level drops to the second level threshold, a second prompt message is sent to the user to prompt the user that the video playing function of the console screen (second-priority device) will be automatically deactivated because the low-voltage battery level further drops, and a countdown may be synchronously displayed.

In this case, the user may manually switch off the console screen, or may do nothing, and the vehicle central controller automatically controls the cockpit domain controller to switch off the console screen at the end of the countdown.

In this embodiment of the disclosure, in order to enable the user to know about the battery swapping process in real time, while waiting for battery swapping, the battery swapping process information may be displayed in different forms based on the low-voltage battery level by a display device of the vehicle.

When the low-voltage battery level is greater than or equal to the second level threshold, the battery swapping process information may be displayed in the form an animation by the console screen to directly and vividly display the battery swapping process, so that better interaction experience can be provided for the user. For example, a positional trajectory or a dynamic battery swapping process animation of removing the battery and/or replacing the battery is displayed.

When the console screen displays an animation of the battery swapping process information, if the user wishes to watch videos using the console screen, a user requirement is first met to display video contents set by the user while the battery swapping process information is displayed in a corner of the console screen in the form of a text and/or a picture by means of a message box, instead of in the form of an animation. In addition, the user may drag, by means of a touch panel of the console screen, the message box to a position that the user desires. With the foregoing method, the user requirement is considered to the maximum extent, the method of the disclosure is more user-friendly, and the interaction experience and satisfaction of the user are further improved.

When the low-voltage battery level is greater than or equal to the third level threshold and less than the second level threshold, the battery swapping process information is displayed in the form a text by means of a message box of the console screen. In addition, backlight of the console screen may be switched off or dimmed to reduce energy consumption of the console screen and prolong availability time of the low-voltage battery.

If the console screen is being used, for example, playing videos set by the user or displaying an animation of the battery swapping process information, before the low-voltage battery level is less than the second level threshold, when the low-voltage battery level is equal to the second level threshold, the display of contents set by the user is automatically switched off, or the display of the battery swapping process information in the form of an animation is switched off, and instead, the battery swapping process information is displayed in the form of a text and/or a picture by means of a message box. In this way, the energy consumption of the console screen is reduced, and time in which the user can get known the battery swapping process information is prolonged to enable the user to know about the battery swapping process timely, which ensures good interaction experience of the user.

When the battery swapping process information is displayed by the console screen, alarm massages related to the low-voltage battery level, the vehicle, and/or the power exchange station end, etc. may further be displayed on the same screen according to a user setting. In addition, when the alarm massages are displayed, processing measures corresponding to the alarm massages may be simultaneously displayed, so that a more targeted service is provided for the user, and the user experience is improved. For example, when the low-voltage battery level drops to a set threshold, the console screen displays an alarm massage about the low-voltage battery level, a prompt that a device needs to be switched off, etc.

When the low-voltage battery level is less than the third level threshold, all second-priority devices are disabled, and the vehicle central controller may not control, by means of the cockpit domain controller, the console screen to display the battery swapping process information, the system message of the vehicle, etc.

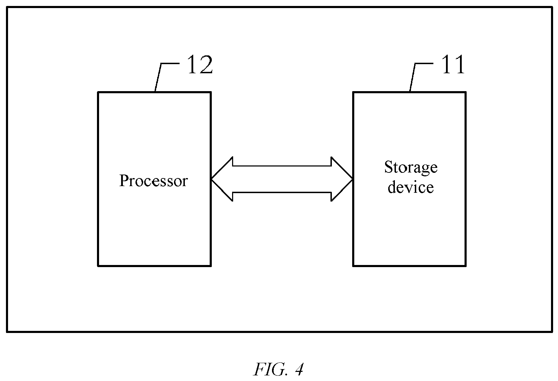

Further, the disclosure further provides a computer device. FIG. 4 is a schematic diagram of a main structure of the computer device according to an embodiment of the disclosure. As shown in FIG. 4, the computer device in this embodiment of the disclosure mainly includes a storage device 11 and a processor 12. The storage device 11 may be configured to store a program for carrying out the on-board device control method in the method embodiment. The processor 12 may be configured to execute a program in the storage device. The program includes but is not limited to the program for carrying out the on-board device control method in the method embodiment. For ease of description, only parts related to the embodiment of the invention are shown. For specific technical details that are not disclosed, refer to the method part of the embodiments of the invention.

The computer device in this embodiment of the disclosure may be a control device formed by various computer devices. In some possible implementations, the computer device may include a plurality of storage devices 11 and a plurality of processors 12. The program for carrying out the on-board device control method in the method embodiment may be divided into a plurality of subprograms, and the subprograms may be separately loaded and run by the processors to carry out different steps of the on-board device control method in the method embodiment. Specifically, each subprogram may be stored separately in a different storage device 11, and each processor 12 may be configured to execute a program in one or more storage devices 11 to jointly implement the on-board device control method in the method embodiment, that is to say, each processor 12 separately performs different steps of the on-board device control method in the method embodiment to jointly implement the on-board device control method in the method embodiment.

The plurality of processors 12 may be processors deployed on the same device. For example, the computer device may be a high-performance device including a plurality of processors, and the plurality of processors 12 may be processors configured on the high-performance device. In addition, the plurality of processors 12 may alternatively be processors deployed on different devices. For example, the above computer device may be a cluster of servers, and the plurality of processors 12 may be processors on different servers in the cluster of servers.

Further, the disclosure further provides a storage medium. The storage medium may be configured to store a program for carrying out the on-board device control method in the method embodiment. The program may be loaded and run by a processor to causes the processor to implement the on-board device control method. For ease of description, only parts related to the embodiment of the invention are shown. For specific technical details that are not disclosed, refer to the method part of the embodiments of the invention. The storage medium may be a storage device formed by various computer devices. Optionally, the storage medium in the embodiments of the disclosure is a non-transitory readable-writable storage medium.

Further, the disclosure further provides a vehicle, including the foregoing computer device. The computer device includes a processor and a storage device. The storage device may be configured to store a program for carrying out the on-board device control method in the method embodiment. The processor may be configured to execute a program in the storage device. The program includes but is not limited to the program for carrying out the on-board device control method in the method embodiment. Optionally, the vehicle is a new energy electric vehicle.

Those skilled in the art should be able to realize that the method steps of the various examples described in conjunction with the embodiments disclosed herein can be implemented by electronic hardware, computer software, or a combination thereof. To clearly illustrate the interchangeability of electronic hardware and software, the compositions and steps of the various examples have been generally described in terms of functionality in the above description. Whether these functions are performed by electronic hardware or software depends on the specific application and design constraints of the technical solutions. Those skilled in the art can implement the described functions by using different methods for each particular application, but such implementation should not be considered as going beyond the scope of the disclosure.

It should be noted that the terms "first" and "second" and other ordinal numbers in the description, claims, and drawings of the disclosure are only intended to distinguish between similar objects, not to describe or indicate a particular order or sequence. It should be understood that the data termed in such a way are interchangeable in proper circumstances, so that this embodiment of the disclosure described herein can be implemented in other orders than the order illustrated or described herein.

In addition, in the descriptions of the disclosure, the term "A and/or B" represents all possible combinations of A and B, for example, only A, only B, or A and B.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the protection scope of the disclosure.

## Claims

1. An on-board device control method, the on-board device being powered by a low-voltage battery module of a vehicle, wherein the method comprises:
obtaining a low-voltage battery level of the low-voltage battery module; and
controlling the on-board device based on the low-voltage battery level and a preset on-board device priority.

2. The on-board device control method according to claim 1, wherein controlling the on-board device based on the low-voltage battery level and a preset on-board device priority comprises:
when the low-voltage battery level is greater than or equal to a first level threshold, allowing a response to a switch-on instruction given by a user for a second-priority device and/or a third-priority device;
when the low-voltage battery level is greater than or equal to a second level threshold and less than the first level threshold, allowing a response to a switch-on instruction given by the user for the second-priority device, and disabling the third-priority device;
when the low-voltage battery level is greater than or equal to a third level threshold and less than the second level threshold, forbidding a response to a switch-on instruction given by the user for the second-priority device, and disabling the third-priority device;
when the low-voltage battery level is less than the third level threshold, disabling the second-priority device and the third-priority device; and
always enabling a first-priority device.

3. The on-board device control method according to claim 1 or 2, wherein controlling the on-board device based on the low-voltage battery level and a preset on-board device priority further comprises:
when the low-voltage battery level drops to the first level threshold, sending a first prompt message to the user, and automatically switching off the switched-on third-priority device; and
when the low-voltage battery level drops to the second level threshold, sending a second prompt message to the user, and automatically switching off the second-priority device switched on by the user.

4. The on-board device control method according to any one of claims 1 to 3, wherein controlling the on-board device based on the low-voltage battery level and a preset on-board device priority further comprises:
when the low-voltage battery level is greater than or equal to the third level threshold and less than the second level threshold, allowing a system message of the vehicle to be displayed by the second-priority device.

5. The on-board device control method according to any one of claims 1 to 4, further comprising:
obtaining battery swapping process information from a power exchange station end; and
displaying the battery swapping process information by an on-board display device based on the low-voltage battery level, wherein
the on-board display device is the second-priority device.

6. The on-board device control method according to claim 5, wherein displaying the battery swapping process information by an on-board display device based on the low-voltage battery level comprises:
when the low-voltage battery level is greater than or equal to the second level threshold, displaying the battery swapping process information in the form of an animation; and
when the low-voltage battery level is greater than or equal to the third level threshold and less than the second level threshold, displaying the battery swapping process information in the form of a text.

7. The on-board device control method according to claim 6, wherein when the battery swapping process information is displayed in the form of an animation, video contents set by the user are displayed in response to a switch-on instruction given by the user for the on-board display device, and the display of the battery swapping process information changes from the animation form to the text form.

8. A computer device, comprising a processor and a storage device, wherein the storage device is adapted to store a plurality of program codes, and the program codes being adapted to be loaded and run by the processor to cause the processor to carry out the on-board device control method of any one of claims 1 to 7.

9. A storage medium, wherein the storage medium is adapted to store a plurality of program codes, the program codes are adapted to be loaded and run by a processor to cause the processor to carry out the on-board device control method of any one of claims 1 to 7.

10. A vehicle, comprising a computer device of claim 8.
